# EUROPEAN PATENT SPECIFICATION

(11) **EP 3 165 406 B1**
(45) Date of publication and mention of the grant of the patent: **15.08.2018**
(21) Application number: 16197021.5
(22) Date of filing: 03.11.2016
(51) Int. Cl.: B60R 11/04, A01B 69/00

(54) **TRACTOR WITH VISION SYSTEM**
TRAKTOR MIT SICHTSYSTEM
TRACTEUR AVEC SYSTÈME DE VISION

(30) Priority: 06.11.2015 IT UB20154924
(43) Date of publication of application: 10.05.2017
(73) Proprietor: SAME DEUTZ-FAHR ITALIA S.p.A., 24047 TREVIGLIO (BG) (IT)
(72) Inventor: TARONI, Francesco, I-24047 Treviglio, BERGAMO (IT); CESANA, Paolo, I-24047 Treviglio, BERGAMO (IT); SPINELLI, William, I-24047 Treviglio, BERGAMO (IT); KALLFASS, Bernd, 89561 Dischingen (DE)
(74) Representative: Gamba, Alessandro

(56) References cited:
- EP-A1- 2 135 498
- EP-A1- 2 464 112
- EP-A1- 2 743 132
- WO-A1-2014/029591
- CA-A1- 2 863 656
- DE-A1-102005 034 201

## Description

This invention relates to a tractor provided with a vision system. Specifically, this invention relates to a tractor equipped with a vision system capable of supporting the user of the tractor in observing the region around the tractor, and especially the blind regions of which the user has an obstructed view. In addition, this invention relates to an accessory vision system for tractors.

In the following description, the term "tractor" means both agricultural tractors and, more generally, earthmoving machinery derived from agricultural tractors. In other words, the term tractor does not limit the dimensions of the vehicle.

Typically some regions around tractors are hidden from the driver's view. In particular, the view is sometimes obstructed by components of the tractor or from obstacles present on the route plan. Sometimes, the user is simply distracted and is paying attention to some of the regions adjacent to the tractor.

These regions adjacent to the tractor for which the user has reduced or completely obstructed vision are known as "blind regions".

Unfortunately, the possibility that, in using the tractor, some regions are not under the user's control, as well as the presence of blind regions, is a risk for both the user of the tractor and for persons who find themselves in these regions. In particular, this risk is further increased when the blind regions are in front of the tractor.

Moreover, the larger the tractor, the greater the size of the adjacent regions, typically blind regions, in which a dangerous situation can occur.

There is, therefore, a deeply felt need to minimise or completely remove such situations in order to make the tractor a safer vehicle for the user and nearby people.

To overcome these problems, in some state of the art tractors the dimensions of components that create obstacles to vision have been minimised as much as possible, or the position of the driver has been improved. However, such solutions only partially minimise the problem, not solving it completely.

The purpose of this invention is to provide a tractor equipped with a vision system that overcomes this problem. An example of a tractor equipped with a vision system is disclosed in the document EP2743132. This document discloses a tractor according to the preamble of claim 1.

This purpose is achieved by a tractor according to claim 1. The dependent claims describe further variants of preferred embodiments.

The characteristics and advantages of the tractor according to this invention will be apparent from the following description, given by way of non-limiting example, in accordance with the accompanying figures, in which:

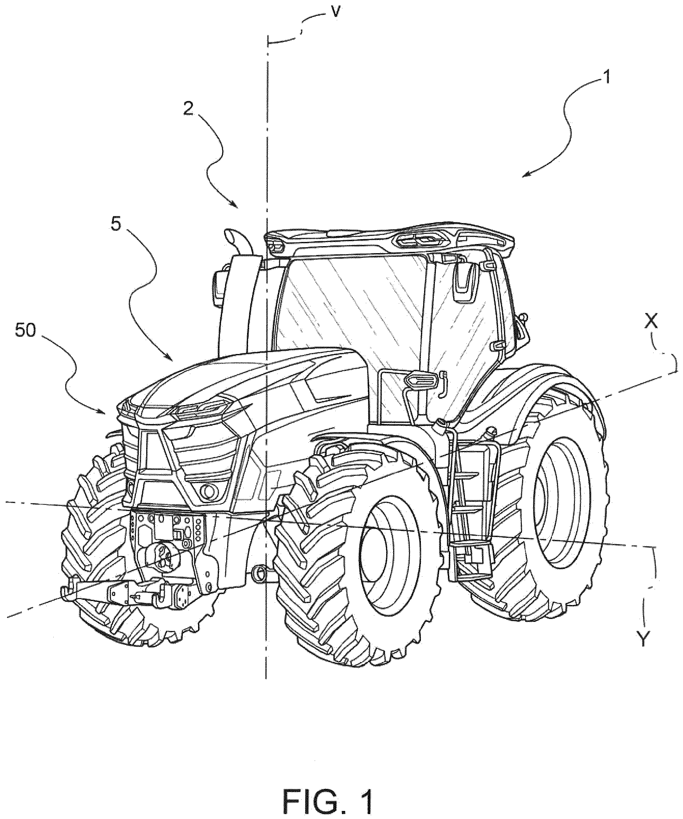

- Figure 1 is an prospective view of a tractor covered by this invention according to a preferred embodiment;

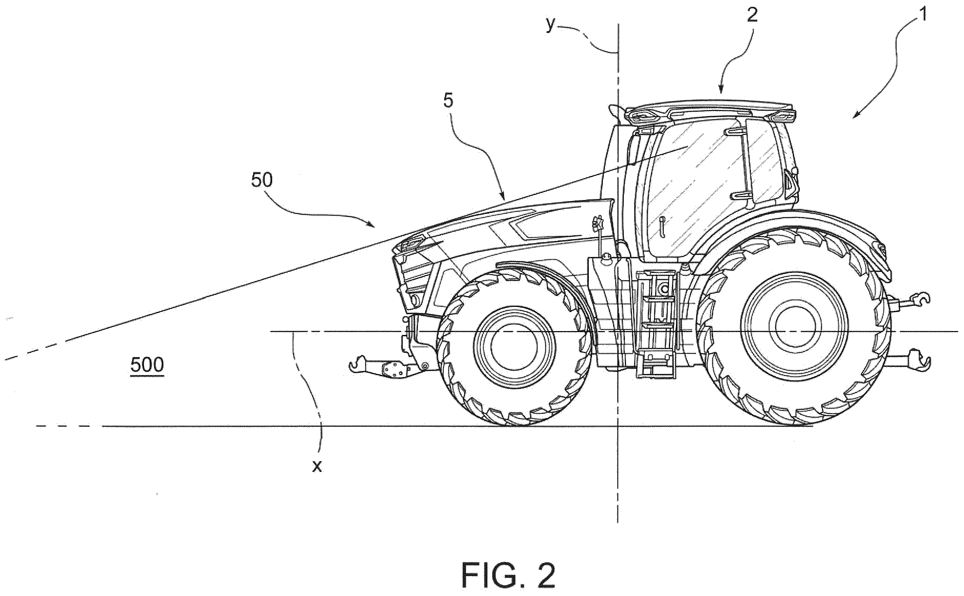

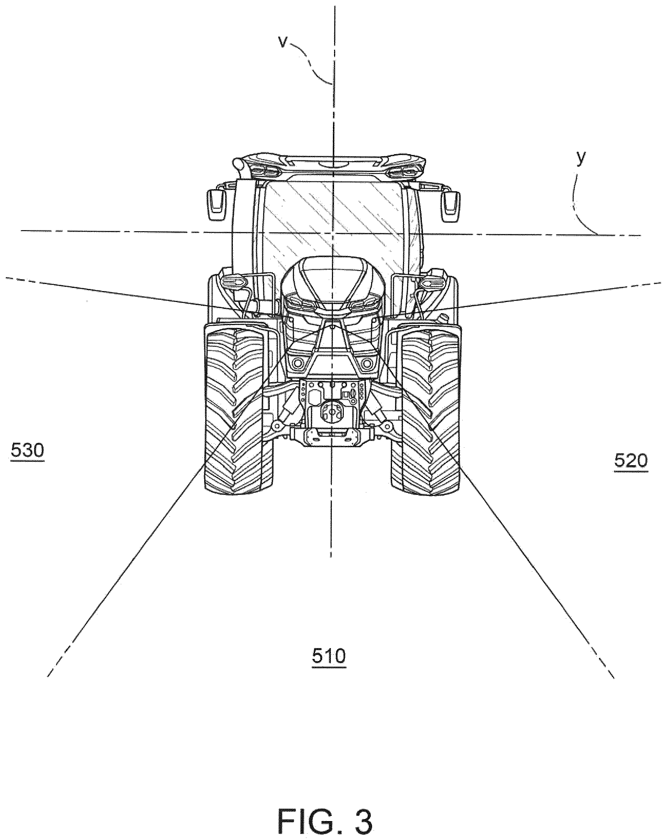

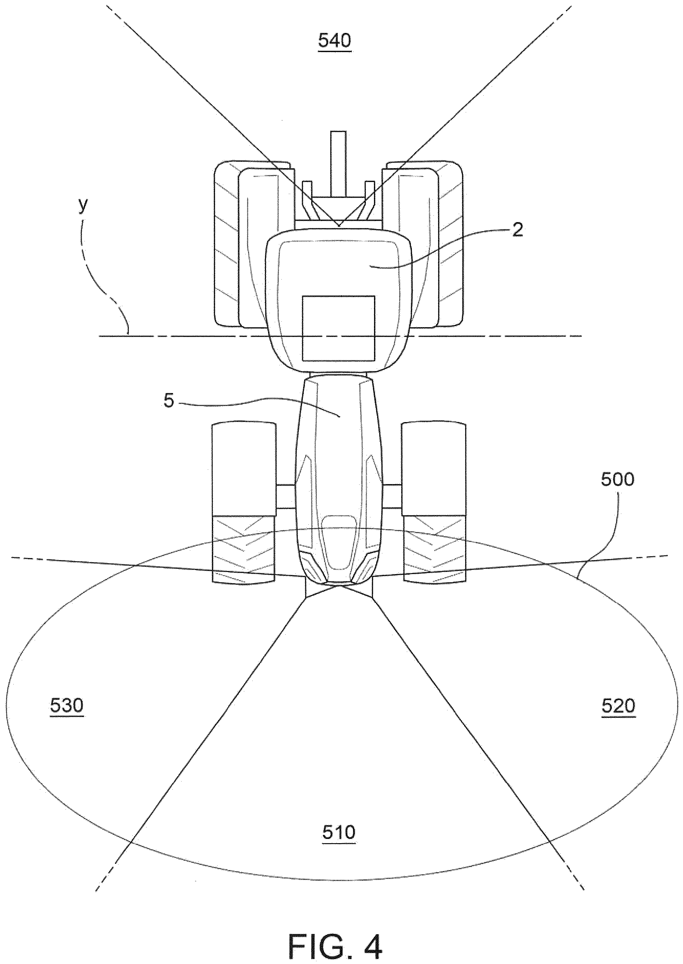

- Figures 2, 3, and 4 respectively show a side view, a front view, and a top view of the tractor of Figure 1, in which some regions observed by the detection group comprised in the vision system of the tractor are shown schematically;

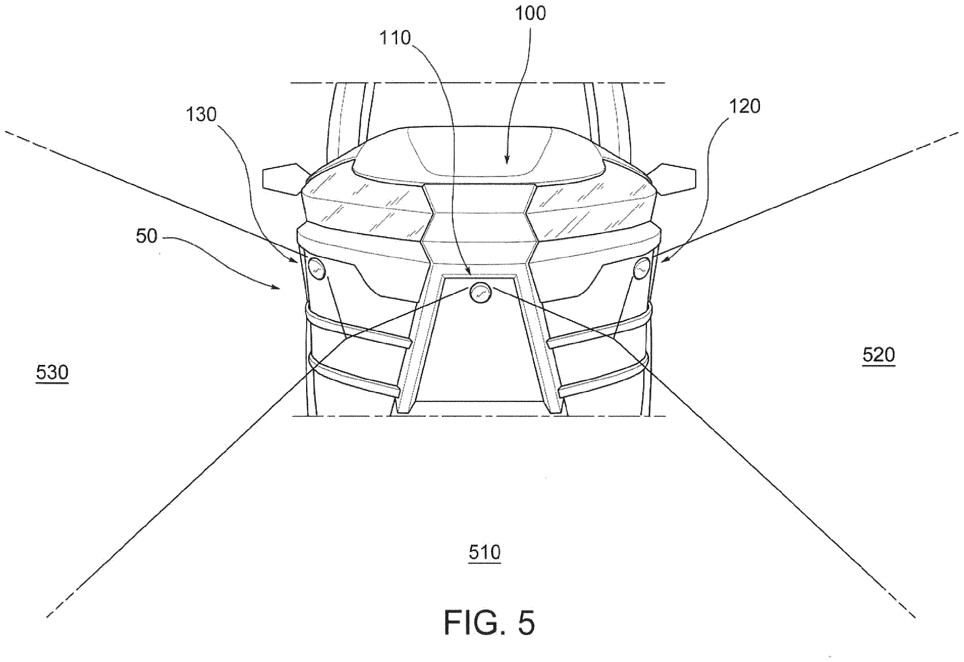

- Figure 5 shows an enlarged view of the tip portion of the bonnet of the tractor hood portion, in which is contained the at least one central blind region camera, the at least one left blind region camera, the at least one right blind region camera and the at least one rear blind region camera;

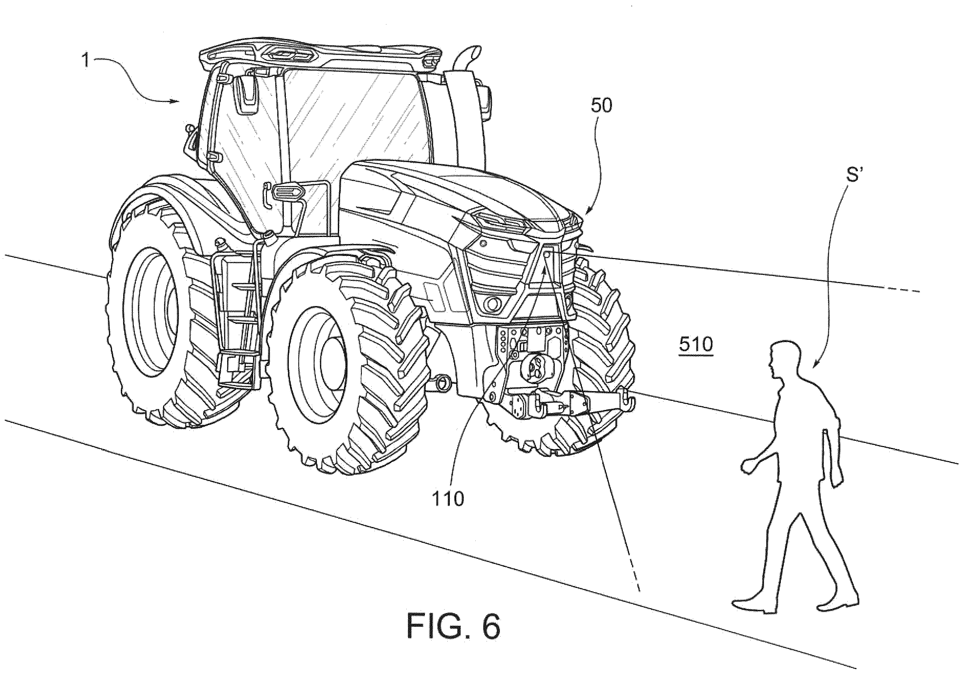

- Figures 6 and 7 schematically show two danger situations in which a subject is present in the blind regions, respectively, a human being and a motor vehicle;

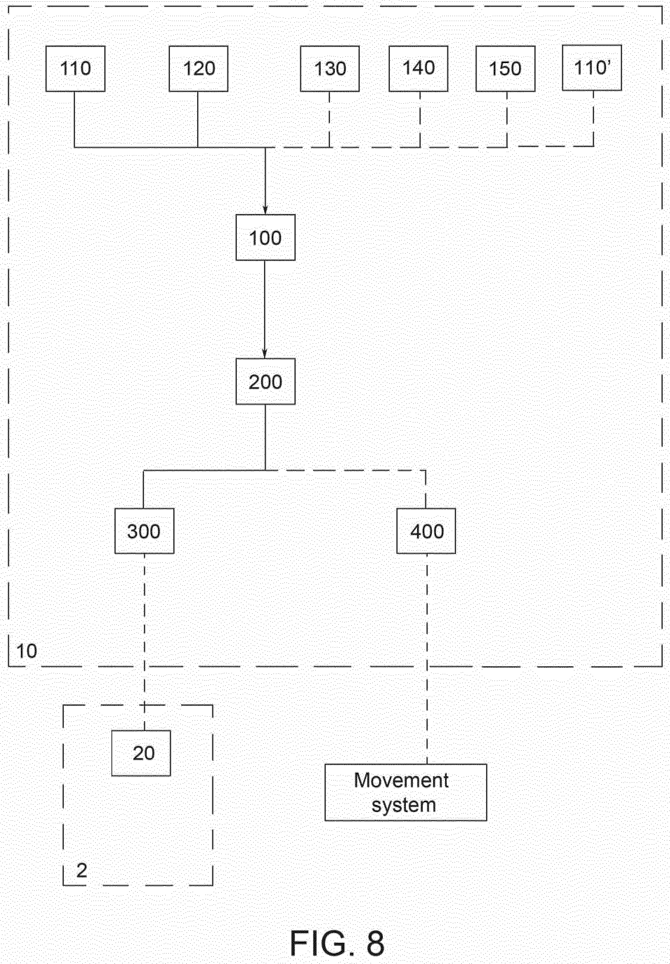

- Figure 8 is a block diagram relating to the operation of the vision system comprised in the tractor;

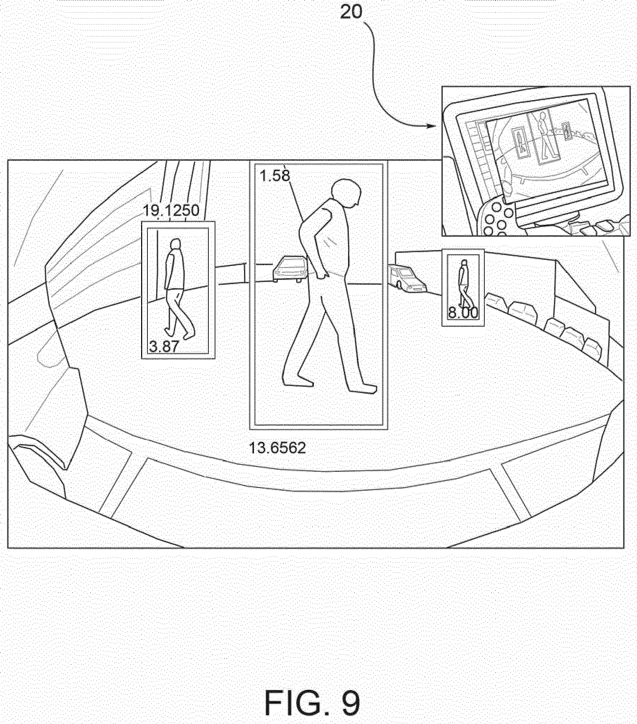

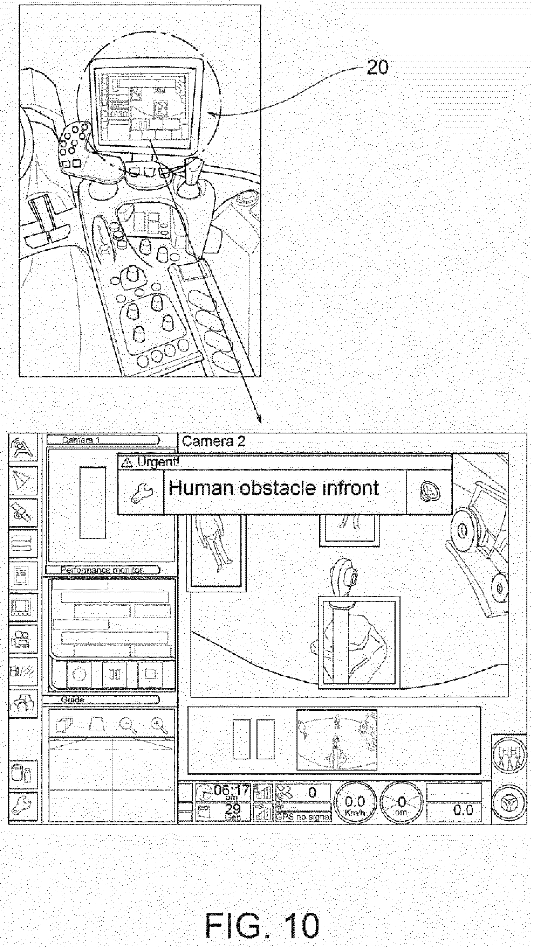

- Figures 9 and 10 are several screenshots of what is shown on the display in the driver's area;

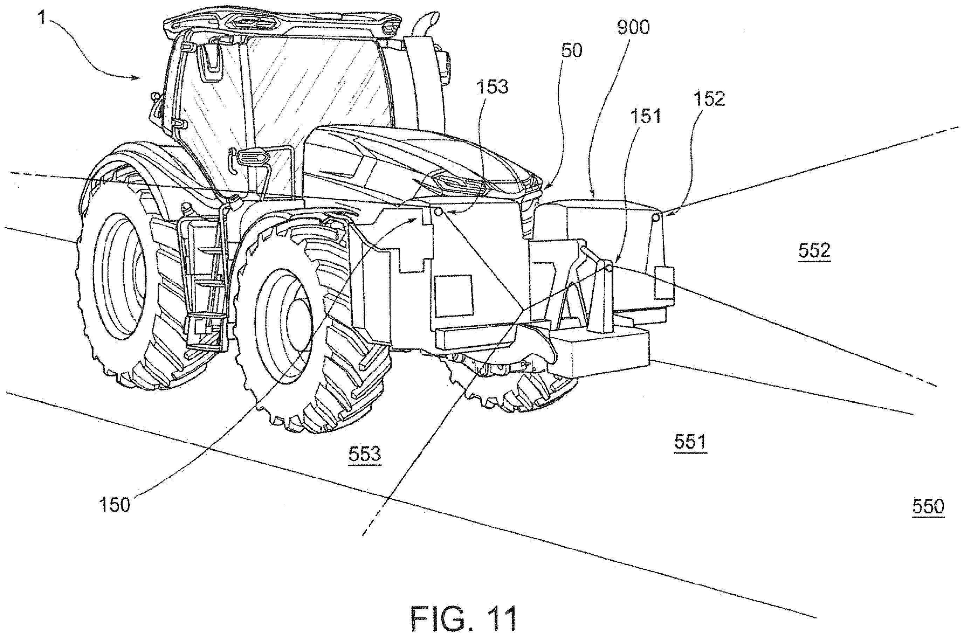

- Figure 11 is a tractor according to this invention with an accessory group and the additional detection system mounted on it;

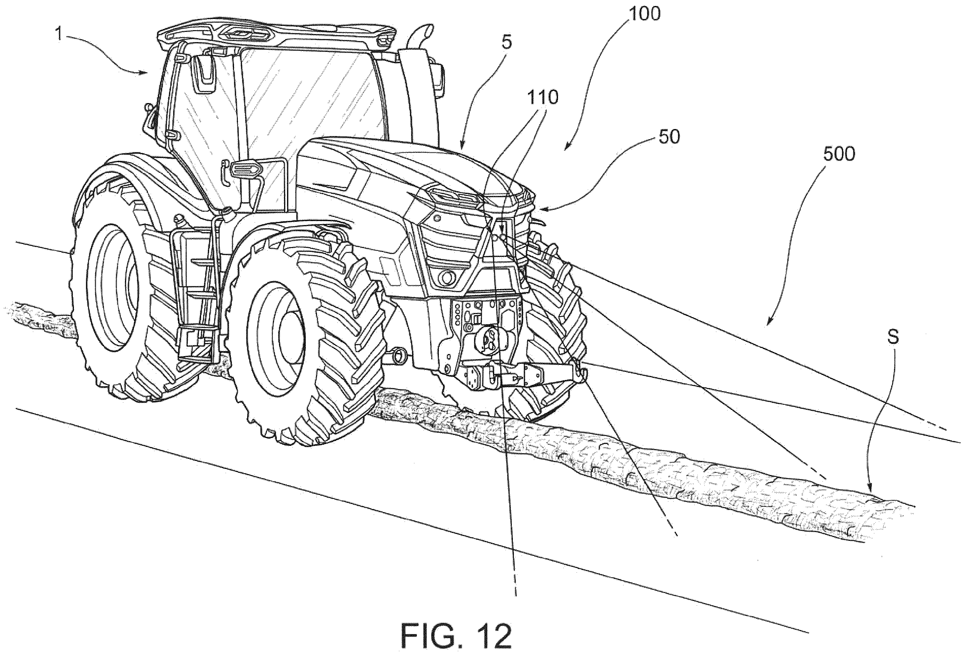

- Figure 12 shows a tractor according to this invention during movement.

In accordance with the accompanying figures, reference number 1 indicates a tractor in its entirety. The figures show a tractor 1 of the agricultural tractor type in a non-limiting manner.

The tractor 1 has a longitudinal axis X-X, along the direction of advancement of the tractor in a straight line, a transverse axis Y-Y, perpendicular to the longitudinal axis X-X and parallel to the axles on which the wheels are mounted, and a vertical axis V-V, perpendicular to the longitudinal axis X-X and the transverse axis Y-Y.

In addition, the tractor 1 comprises a driving area 2 for the user, inhabitable by him, preferably composed of a seat or a closed cabin.

Preferably, the driving area 2 comprises a screen 20 that allows the user, for example driving, to use certain functions of the tractor 1.

According to a preferred embodiment, an adjacent region is identified around the tractor 1. Specifically, this adjacent region comprises regions in which the user, housed in the driving area 2, has an obstructed view, and regions in which the user does not have a view when turning his attention to other regions and in other directions (for example, when the user is looking forwards while driving and does not have a view of the rear regions of the tractor, not having them under control).

According to a preferred embodiment, the tractor 1 comprises a bonnet 5, suitable to contain a plurality of components and systems of the tractor, which extends in length along said longitudinal axis X-X frontally to the driving area 2, and in height parallel to the vertical axis V-V.

Preferably, the bonnet 5 has a tip portion 50 at its upper front end. Preferably, at least a part of the front headlights of the tractor 1 is located in said tip portion 50.

According to a preferred embodiment, a centre blind region 510 is identifiable in the area surrounding the tractor 1 for which the user, housed in the driving area 2, has his view obstructed by the bonnet 5. Preferably, this centre blind region 510 is located frontally to the bonnet 5, along the longitudinal axis X-X. For a tractor of considerable size, this centre blind region 510 even extends beyond 10 metres from the tip of the tractor 1.

In other words, in a preferred embodiment, the user of the tractor 1 in his driving position in the driving area 2, never has an unobstructed view of the centre blind region 510.

Preferably, moreover, at the sides, for example along the transverse axis Y-Y, of the centre blind region 510, there are a left blind region 520 and a right blind region 530 of which the user housed in the driving area 2 has an obstructed view.

Preferably, moreover, on the rear of the tractor 1, for example, along the longitudinal axis X-X, there is a rear blind region 540 in which the user housed in the driving area 2 has an obstructed view, typically when seated in the driving position.

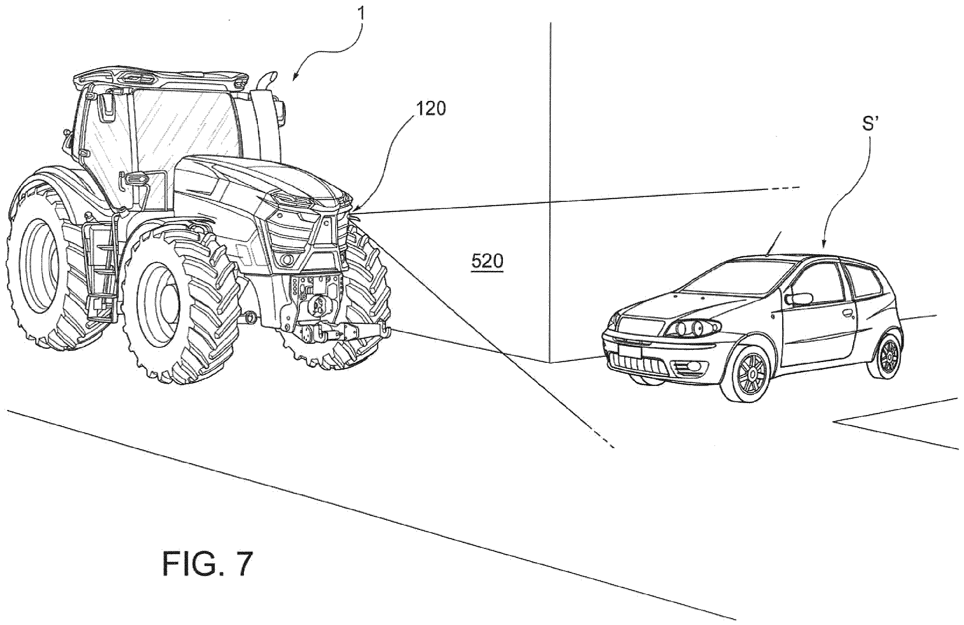

In other words, in a preferred embodiment, the user of the tractor 1 in his driving position in the driving area 2, during normal use, finds himself in situations in which he does not have an unobstructed view, as shown by way of example in accompanying Figure 7.

In addition, the tractor 1 comprises a movement system suitable to allow motion along a route plan, independently of whether it is a roadway or a field on which to operate. Preferably, among other components, the movement system comprises the engine group, transmission group and steering group, preferably of the automated steering type. Preferably, in the embodiment shown in the accompanying figures, (in a non-limiting manner), the movement system of the tractor of this invention has four drive wheels (as needed) and only two front steering wheels.

The tractor 1 of this invention, also comprises a vision system 10, suitable, as described below, to observe several adjacent regions of the tractor in order to identify the presence of a subject and best use this information. Specifically, in a preferred embodiment, the vision system 10 is suitable to observe a predefined region 500 proximal to the tractor, preferably, the centre blind region 510. In further preferred embodiments, the vision system 10 is also suitable for observing the left blind region 520 and the right blind region 530 and/or the rear blind region 540.

According to a preferred embodiment, the vision system 10 comprises a detection group 100 comprising at least one camera 100' suitable to observe the predefined region 500.

According to a preferred embodiment, the detection group 100 comprises at least one centre camera 110 suitable to observe the centre blind region 510. Preferably, said at least one centre camera 510 is housed on the tip portion 50 of the bonnet 5, for example housed in the headlights or in the front aeration grilles.

In a further preferred embodiment, the detection group 100 comprises at least one left camera 120 and at least one right camera 130 suitable to observe the left blind region 520 and the right blind region 530. Preferably, said at least one left camera 120 and at least one right camera 130 are housed on the tip portion 50 of the bonnet 5, for example housed in the headlights or in the front aeration grilles.

Furthermore, in a still further preferred embodiment, the detection group 100 comprises at least a rear camera 140 suitable to observe the rear blind region 540. Preferably, said rear camera 140 is housed on the driver's cabin or on the rear bumpers of the tractor.

In a preferred embodiment, the detection group 100 comprises at least one centre camera 110 and preferably, one left camera 110 and one right camera 130.

In a further preferred embodiment, the detection group 100 comprises at least two centre cameras 110 for observing the centre blind region 510 with stereoscopic vision.

Preferably, the detection group 100 comprises at least two left cameras 120 and at least two right cameras 130 respectively for observing the left blind region 520 and the right blind region 530 with stereoscopic vision.

In a still further preferred embodiment, the detection group 100 comprises at least two rear cameras 140 to observe the rear blind region 540 with stereoscopic vision.

According to a preferred embodiment, the tractor 1 is suitable for mounting accessory groups 900 frontally to the tip portion 50 of the bonnet 5 for performing predefined operations, for example for moving or lifting of objects or tools or performing specific operations; preferably, the tractor 1 comprises a power take-off or actuation groups placed frontally to the bonnet 5 operatively connectable with the accessory groups 900. In turn, these accessory groups 900 block the user's view, in some cases by increasing the amplitude of the centre 510, left 520 and right 530 blind regions.

In order to observe the blind regions even in the presence of said accessory groups, the detection group 100 comprises an additional group 150 removably fixable to the edge of said accessory groups 900 comprising at least one additional centre camera 151 suitable to observe an additional centre blind region 551. Preferably, moreover, the additional group 150 comprises at least one additional left camera 152 and at least one additional right camera 153 positioned at the sides of the at least one additional centre camera 151. Preferably, also the additional group 150, in a preferred embodiment comprises individual cameras, while in other embodiments, it includes cameras suitable to observe with stereoscopic vision.

According to a preferred embodiment, the vision system 10 comprises an analysis group 200 suitable for processing and analysing what is detected by the detection unit 100, to verify the presence of a stationary S or moving S' subject in the centre blind region 510 and/or in the left blind region 520 and in the right blind region 530 and/or in the rear blind region 540.

Preferably, the analysis group 200 comprises a data processing unit that operates by means of an algorithm or software to analyse what is detected by the analysis group.

Preferably, the analysis group 200 is configured to detect the distance between the tractor 1, for example its tip portion 50, and the subject detected in the centre blind region 510 and/or left blind region 520 and in the right blind region 530 and/or the rear blind region 540.

According to a preferred embodiment, the analysis group 200 is configured to identify the type of subject detected, between a stationary subject S and a moving subject S', by also detecting the direction of motion of the latter.

For example, the analysis group 200 is suitable to distinguish the presence of an animate subject from an inanimate subject, distinguishing a living being, such as a human or animal silhouette, or inanimate subjects, such as obstacles, for example a vehicle, or static references, such as a row of a vineyard or a field of cultivated grain, or a row of hay.

According to a preferred embodiment, the analysis group 200 analyses the images acquired by the detection group for example using as the procedure that of the Histogram of oriented Gradients (HoG), and/or the procedure according to the principle of Support Vector Machines (SVM). Preferably, by analysing the sequence of different frames detected by the detection group 100, the analysis group 200 recognises the shape of the detected subjects, for example by detecting a human figure or silhouette.

According to a preferred embodiment, the analysis group 200 is suitable to analyse all the frames of the images acquired by the detection group 100. In some embodiments, the analysis group 200 is suitable to analyse a predefined number of frames, according to a given sampling frequency. Preferably, each frame is analysed and decomposed for example into rectangles so as to distinguish the presence of animate or inanimate subjects. Preferably, the analysis group 200 analyses and compares what is detected using specific information stored on the storage means comprised in it, and/or specific information or data integrated and managed in the algorithm.

Preferably the vision system 10, also comprises a signalling group 300 suitable to signal to the user what is detected by the detection group 100 and verified by the analysis group 200 with a video signal, for example on the screen 20 housed in the driving area 2.

According to a preferred embodiment, the signalling group 300 sends a video signal to the screen processed with respect to the images acquired by the detection group 100. In particular, the screen shows the acquired images containing further elements, for example specific elements signalling obstacles, for example special boxes that indicate the subject detected. Preferably, the colour of such elements and boxes varies depending on the distance between the tractor 1 and the subjects detected. Preferably, the screen also displays the distances of the subjects between the tractor and the subjects detected. Preferably, the screen also displays video alarm signals.

In addition, the signalling group 300 is suitable to signal to the user what is detected by the detection group 100 and verified by the analysis group 200 by means of an acoustic signal. Preferably, the intensity of the acoustic signal varies as a function of the distance between the tractor 1 and the subject detected.

In addition, according to a preferred embodiment, the vision system 10 also comprises a control group 400 operatively connected to the movement system of the tractor 1 for controlling the stationing, moving or stopping of the tractor 1 as a function of what is verified by the analysis group 200. For example, in a preferred embodiment, the control group 400 is operatively connected with the control unit of the tractor.

Preferably, if the analysis group 200 detects the presence of a moving subject S' in the predefined region, preferably in the blind regions, the control group 400 is suitable to command the slowing or stopping of the tractor 1 in movement and/or is suitable to command the stationing of the tractor 1. In other words, if the analysis unit 200 detects the presence of a moving subject S', for example a human being or an animal, or another vehicle within one of the blind regions observed by the detection group 100, by means of the control group 400 operating with the movement system, the tractor 1 is guided or maintained in a safe situation, for example by slowing down the movement, for example by stopping it, or keeping it in a stationing position. In further embodiments, it is also envisaged that by operating with the movement system, the control group 400 steers the tractor 1 autonomously in a safe position.

Moreover, according to a preferred embodiment, through the mutual interaction of the various components, the analysis group 200 is also configured to detect the type of stationary subject S in the predefined regions, identifying an automatic guidance configuration in which the detection group 100, analysis group 200 and the control group 400 operate with the movement system to independently guide the tractor 1 in its movement. For example, preferably, the analysis group 200 is suitable for detecting static references on the route plan of the tractor 1: a row of a vineyard, a trace of a field, an accumulated amount of hay; the tractor 1 by means of the vision system is thus configured in an automatic guidance configuration in which it is guided in specific operations, such as swathing.

According to a still further preferred embodiment, through the mutual interaction of the various components, the analysis group 200 is also configured to detect a possible moving subject, identifying an automatic guidance configuration in which the detection group 100, analysis group 200 and the control group 400 operate with the movement system to independently guide the tractor 1 in its movement. For example, preferably, the analysis group 200 is suitable for detecting moving references on the route plan of the tractor 1: for example, another tractor or another agricultural machine that is operating on a field, for example to perform certain fleet operations.

Preferably, the control group 400 is operatively connected to the automated steering group to control its movement in a predefined steering angle, allowing both the deviation towards a safe area in which the blind regions do not contain subjects, or allowing automatic guidance in the aforesaid swathing configuration.

The control group 400 is operatively connected to the continuous transmission group comprised in the tractor 1 for controlling a predefined transmission ratio.

In further embodiments, the control group is operatively connected with the braking system, for example the ABS or ESP system.

This invention also relates to an accessory vision system for tractors. Specifically, the accessory vision system for tractors comprises all the components and characteristics described above for the tractor embodiment comprising a vision system. In particular, the accessory vision system is applicable to a tractor and in particular, to the screen of the driving area, as well as the movement system.

Preferably, the accessory vision system includes a detection group provided with at least one camera fixable to predefined portions of the tractor or of its accessory groups. Specifically, the camera is positionable in the most extreme portions of the tractor to aid the vision of the adjacent regions by the user. The accessory vision system also comprises analysis and signalling groups similar to those described above, and preferably, also control groups similar to those described above.

Preferably, by means of the accessory vision system, even tractors that do not comprise a vision system such as that described above are suitable to signal the presence of subjects and obstacles in the regions adjacent to the user and/or to command the stationing, movement and/or stopping of the tractor to avoid an accident.

Furthermore, by means of the accessory vision system it is also possible to obtain the automatic guidance configuration of the tractor that it is mounted on.

Innovatively, the tractor of this invention allows achieving the intended purpose of the invention, i.e., to improve the view of the user.

Advantageously, the tractor of this invention, allows the user to check the situation in the regions adjacent to the tractor, for example in the blind regions, both with the tractor moving and stationary. Moreover, the presence of a stationary or moving subject that enters said regions adjacent to the tractor is detected by the vision system is reported to the user by a processed visual signal and/or an audio signal.

Moreover, advantageously, upon the occurrence of specific conditions detected, the tractor is able to automatically act to avoid the accident, by stopping or remaining in a stationing condition or, in some preferred embodiments, by changing its direction of motion. Advantageously, in other words, the vision system works both passively, by alerting the user of the possible danger, and actively, by acting with the various components of the movement system to avoid the possible accident.

Moreover, advantageously, the vision system is configured to detect the distance of the stationary or moving subject detected, as a function of which the control group commands the action of stopping, and/or commands a special alarm signal. Advantageously, the vision system is extremely versatile, being configured to detect the distance between the tractor and the subject, between camera and subject, between a given portion of the tractor and the subject, for example between the driving position and the subject.

A further advantageous aspect lies in the fact that the vision system is configured to detect the direction of movement of the moving subject detected, as a function of which the control group commands the action of stopping or stationing.

A still further advantageous aspect of the tractor of this invention lies in the fact that the user is assisted when he must enter a road towards which his vision is obstructed; in fact, thanks to the vision system, the user is not required to project himself beyond the obstacle by entering the road with a portion of tractor to have a clear view, but only needs to display the region on the screen. Moreover, if the vision system detects a presence, the tractor is kept in a stationing position and its movement is inhibited.

Advantageously, the detection group is housed in the most extreme portions of the tractor, for example as regards the centre, left and right cameras, in the tip portion in such a way that their view is not occluded by additional components of the tractor. For example, these components of the detection group are housed in the front headlights of the tractor or in the front grilles.

Moreover, advantageously, the detection group comprises an additional group removably fixable on possible accessory groups fixable in turn to the front of the tractor in such a way as to effectively solve the problem even in these operating conditions.

Advantageously, the detection group provides a single camera per blind region to be observed, resulting simple to install and manage but, in other embodiments, more than one camera is provided in order to have stereoscopic views of the respective blind regions.

A still further advantageous aspect is linked to the fact that the vision system is able to distinguish the types of subjects in the regions observed, distinguishing the inanimate objects from animated ones, for example hay or an obstacle, from a human being or an animal, to assess any movements or stop the tractor and/or generate alarm signals.

Moreover, advantageously, the vision system is suitable to assist the user in the performance of several automatic or semi-automatic operations: for example, by means of the vision system, the presence of hay is distinguishable in such a way as to automatically set a course, for example to perform swathing; similarly, the vision system allows following a row of a vineyard and commanding the automatic guidance direction of the tractor.

Advantageously, on the screen of the driving area the user enjoys the use of the images detected by the cameras processed with the information about the subject detected; for example, the subject detected is highlighted in the images on the screen or alarm signals are displayed attracting the user's attention in case of danger.

Advantageously, moreover, by means of the vision system and the interaction of this with the various components of the tractor, fleet operations are manageable on a route plan or in a field, for example to follow another agricultural machine at a distance.

A further advantage of this invention lies in the fact that all the above mentioned advantages are more evident the larger the dimensions of the tractor. Advantageously, in the agricultural tractor embodiment, typically having blind regions of considerable size, these advantages are even more noticeable.

A still further advantageous aspect, lies in the fact that also by means of an additional vision system, these advantages are also achievable on a tractor that does not comprise a vision system.

It is clear that one skilled in the art, in order to meet contingent needs, may make changes to the tractor, bonnet and movement means described above, all contained within the scope of protection defined by the following claims.

## Claims

1. Tractor (1) comprising:
- a driving area (2) for housing a user, comprising a screen (20);
- a movement system;
- a vision system (10) comprising:
i) a detection group (100) comprising at least one camera (100') suitable to observe a predefined region (500) proximal to the tractor (1);
ii) an analysis group (200), suitable to process and analyse the images acquired by the detection group (100), to verify the presence of a stationary (S) or moving (S') subject in the predefined region (500);
iii) a signalling group (300) suitable to signal to the user what is detected by the detection group (100) and verified by the analysis group (200) by means of:
a processed video signal on the screen (20) that displays the predefined region (500) and the stationary (S) or moving (S') subject detected; and/or
an acoustic signal; the tractor (1) being **characterized by** a control group (400) operatively connected to the movement system to command the stationing of the tractor (1), or a predefined movement of the tractor (1) or the stopping of the tractor (1) in a situation in which the analysis group (200) detects the presence of a stationary subject (S) or moving subject (S') in the predefined region (500); whereby the moving system comprises a continuous transmission group and the control group (400) is operatively connected to the continuous transmission group to command a predefined transmission ratio.

2. Tractor (1) according to any of the preceding claims, wherein the analysis group (200) is configured to detect the distance between the tractor (1) and the stationary (S) or moving (S') subject detected.

3. Tractor (1) according to any of the preceding claims, comprising a bonnet (5) that extends along a longitudinal axis (X-X) of the tractor frontally to the driving area (2), wherein the bonnet (5), at its upper front end includes a tip portion (50) and the detection group (100) comprises a centre camera (110) housed in said tip portion (50) suitable to observe a centre blind region (510) in which the view of the user housed in the driving area (2) is obstructed by the bonnet (5).

4. Tractor (1) according to any of the preceding claims, comprising a bonnet (5) that extends along a longitudinal axis (X-X) of the tractor frontally to the driving area (2), wherein the detection group (100) comprises at least one left camera (120) placed at the sides of the bonnet (5), preferably housed in a tip portion (50), suitable to observe a left blind region (520) and right blind region (530), preferably at the sides of the centre blind region (510), for which the view of the user housed in the driving area (2) is obstructed.

5. Tractor (1) according to claims 3 or 4, wherein the analysis group (200) is configured to detect the distance between the tractor (1) and the subject detected in the centre blind region (510) and/or left blind region (520) and/or the blind right region (530).

6. Tractor (1) according to any of the preceding claims, wherein the detection group (100) comprises a rear camera (140), preferably housed in a rear portion of the tractor (1), suitable to observe a rear blind region (540), and the analysis group (200) is configured to detect the distance between the rear portion and the subject detected in the rear blind region (540).

7. Tractor (1) according to any of the preceding claims, wherein the analysis group (200) is configured to identify the type of subject detected, between a stationary subject (S) and a moving subject (S'), by also detecting the direction of motion of the latter.

8. Tractor (1) according to claim 7, wherein the control unit (400) is suitable to command the slowing or stopping of the tractor (1) in movement to avoid an impact with the subject and/or is suitable to command the fixed stationing of the tractor (1), as a function of the detection, by the analysis group (200), of the presence of a stationary (S) or moving (S') subject in the video produced by the detection group (100).

9. Tractor (1) according to claim 7, wherein the analysis group (200) and the control group (400) operate with movement system to automatically guide the tractor (1) in the execution of a predefined course, for example that follows the main direction of extension of the stationary subject (S) or a predefined course with respect to the direction of motion of the moving subject (S'), as a function of the detection of the analysis group (200) configurable to detect the type of stationary subject (S), for example, its main direction of extension, or the type of moving subject (S'), for example, its main direction of motion.

10. Tractor (1) according to any of the preceding claims, suitable to mount accessory groups (900) frontally to the tractor (1) for the execution of predefined operations, wherein the detection group (100) also comprises an additional group (150) removably fixable to the edge of said possible accessory groups (900) comprising at least one additional centre camera (151) suitable to observe an additional centre blind region (551) for which the view of the user, housed in the driving area (2), is obstructed by the bonnet (5) and the accessory group (900) .

11. Tractor (1) according to any of the preceding claims, wherein the additional group (150) further comprises an additional left camera (152) and at least one additional right camera (153) positionable at the sides of the at least one additional centre camera (151), suitable to observe an additional left blind region (552) and an additional right blind region (553) transverse with respect to the centre blind region (510), for which the view of the user housed in the driving area (2) is obstructed.

12. Tractor (1) according to any of the preceding claims, wherein the detection group (100) comprises at least two centre cameras (110) for observing the centre blind region (510) with stereoscopic vision.

13. Tractor (1) according to claim 4 in combination with any of the preceding claims, wherein the detection group (100) comprises at least two left cameras (120) and at least two right cameras (130) respectively for observing the left blind region (520) and the right blind region (530) with stereoscopic vision.

14. Tractor (1) according to claim 5 in combination with any of the preceding claims, wherein the detection group (100) comprises at least two rear cameras (140) for observing the rear blind region (540) with stereoscopic vision.

15. Tractor (1) according to any of the preceding claims, wherein the movement system comprises an automated steering group and the control group (400) is operatively connected to the automated steering group to commend its movement at a predefined steering angle.

## Patentansprüche

1. Traktor (1), umfassend:
- einen Fahrbereich (2) zum Unterbringen eines Benutzers, umfassend einen Bildschirm (20);
- ein Bewegungssystem;
- ein Sichtsystem (10) umfassend:
i) eine Erfassungsgruppe (100), die zumindest eine Kamera (100') umfasst, die geeignet ist, einen vordefinierten Bereich (500) in der Nähe des Traktors (1) zu beobachten;
ii) eine Analysegruppe (200), geeignet ist, die von der Erfassungsgruppe (100) erworbenen Bilder zu verarbeiten und zu analysieren, um das Vorhandensein eines stationären (S) oder sich bewegenden (S') Subjekts in dem vordefinierten Bereich (500) zu verifizieren;
iii) eine Signalisierungsgruppe (300), die geeignet ist, dem Benutzer zu signalisieren, was von der Erfassungsgruppe (100) erfasst und von der Analysegruppe (200) verifiziert wird, und zwar mittels:
eines verarbeiteten Videosignals auf dem Bildschirm (20), das den vordefinierten Bereich (500) und das stationäre (S) oder sich bewegende (S') Subjekt erfasst; und/oder
eines akustischen Signals;
wobei der Traktor (1) **gekennzeichnet ist durch** eine Steuer- bzw. Regelgruppe (400),
die operativ mit dem Bewegungssystem verbunden ist, um die Stationierung des Traktors (1) oder eine vordefinierte Bewegung des Traktors (1) oder das Anhalten des Traktors (1) in einer Situation zu befehlen, in der die Analysegruppe (200) das Vorhandensein eines stationären Subjekts (S) oder eines sich bewegenden Subjekts (S') in dem vordefinierten Bereich (500) erfasst;
wobei das Bewegungssystem eine Stufenloses-Getriebe-Gruppe umfasst und die Steuer- bzw. Regelgruppe (400) operativ mit der Stufenloses-Getriebe-Gruppe verbunden ist, um ein vordefiniertes Übersetzungsverhältnis zu befehlen.

2. Traktor (1) nach einem der vorhergehenden Ansprüche, wobei die Analysegruppe (200) konfiguriert ist, den Abstand zwischen dem Traktor (1) und dem erfassten stationären (S) oder sich bewegenden (S') Subjekt zu erfassen.

3. Traktor (1) nach einem der vorhergehenden Ansprüche, umfassend eine Motorhaube (5), die sich entlang einer Längsachse (X-X) des Traktors frontal zu dem Fahrbereich (2) erstreckt, wobei die Motorhaube (5) an ihrem oberen vorderen Ende einen Spitzenabschnitt (50) enthält und die Erfassungsgruppe (100) eine Mittelkamera (110) umfasst, die in dem Spitzenabschnitt (50) untergebracht ist, geeignet, einen zentralen Blindbereich (510) zu beobachten, in dem die Sicht des Benutzers, der in dem Fahrbereich (2) untergebracht ist, durch die Motorhaube (5) versperrt ist.

4. Traktor (1) nach einem der vorhergehenden Ansprüche, umfassend eine Motorhaube (5), die sich entlang einer Längsachse (X-X) des Traktors frontal zu dem Fahrbereich (2) erstreckt, wobei die Erfassungsgruppe (100) zumindest eine linke Kamera (120) umfasst, die an den Seiten der Motorhaube (5) platziert ist, vorzugsweise in einem Spitzenabschnitt (50) untergebracht, geeignet, einen linken Blindbereich (520) und einen rechten Blindbereich (530) zu beobachten, und zwar vorzugsweise an den Seiten des zentralen Blindbereichs (510), für den die Sicht des Benutzers, der in dem Fahrbereich (2) untergebracht ist, versperrt ist.

5. Traktor (1) nach Anspruch 3 oder 4, wobei die Analysegruppe (200) konfiguriert ist, den Abstand zwischen dem Traktor (1) und dem in dem zentralen Blindbereich (510) und/oder dem linken Blindbereich (520) und/oder dem rechten Blindbereich (530) erfassten Subjekt zu erfassen.

6. Traktor (1) nach einem der vorhergehenden Ansprüche, wobei die Erfassungsgruppe (100) eine hintere Kamera (140) umfasst, die vorzugsweise in einem hinteren Abschnitt des Traktors (1) untergebracht ist, geeignet, einen hinteren Blindbereich (540) zu beobachten, und wobei die Analysegruppe (200) konfiguriert ist, den Abstand zwischen dem hinteren Abschnitt und dem in dem hinteren Blindbereich (540) erfassten Subjekt zu erfassen.

7. Traktor (1) nach einem der vorhergehenden Ansprüche, wobei die Analysegruppe (200) konfiguriert ist, den Typ des erfassten Subjekts zwischen einem stationären Subjekt (S) und einem sich bewegenden Subjekt (S') zu identifizieren, indem auch die Richtung der Bewegung des letzteren erfasst wird.

8. Traktor (1) nach Anspruch 7, wobei die Steuer- bzw. Regeleinheit (400) geeignet ist, das Verlangsamen oder Anhalten des Traktors (1) in Bewegung zu befehlen, um ein Zusammenstoßen mit dem Subjekt zu vermeiden, und/oder geeignet ist, die feste Stationierung des Traktors (1) als eine Funktion der Erfassung, durch die Analysegruppe (200), des Vorhandenseins eines stationären (S) oder sich bewegenden (S') Subjekts in dem von der Erfassungsgruppe (100) erzeugten Video zu befehlen.

9. Traktor (1) nach Anspruch 7, wobei die Analysegruppe (200) und die Steuer- bzw. Regelgruppe (400) mit einem Bewegungssystem arbeiten, um den Traktor (1) automatisch in der Ausführung eines vorbestimmten Verlaufs zu führen, der beispielsweise der Hauptrichtung der Erstreckung des stationären Subjekts (S) oder einem vordefinierten Verlauf in Bezug auf die Bewegungsrichtung des sich bewegenden Subjekts (S') folgt, als eine Funktion der Erfassung der Analysegruppe (200), die konfigurierbar ist, die Art des stationären Subjekts (S), zum Beispiel seine Haupterstreckungsrichtung, oder die Art des sich bewegenden Subjekts (S'), beispielsweise seine Hauptbewegungsrichtung, zu erfassen.

10. Traktor (1) nach einem der vorhergehenden Ansprüche, der geeignet ist, Zubehörgruppen (900) frontal zu dem Traktor (1) für die Ausführung von vordefinierten Vorgängen zu montieren, wobei die Erfassungsgruppe (100) auch eine zusätzliche Gruppe (150) umfasst, die entfernbar an der Kante der möglichen Zubehörgruppen (900) befestigbar ist, umfassend zumindest eine zusätzliche Mittelkamera (151), die geeignet ist, einen zusätzlichen zentralen Blindbereich (551) zu beobachten, für den die Sicht des Benutzers, der in dem Fahrbereich (2) untergebracht ist, durch die Motorhaube (5) und die Zubehörgruppe (900) versperrt ist.

11. Traktor (1) nach einem der vorhergehenden Ansprüche, wobei die zusätzliche Gruppe (150) ferner eine zusätzliche linke Kamera (152) und zumindest eine zusätzliche rechte Kamera (153) umfasst, die an den Seiten der zumindest einen zusätzlichen Mittelkamera (151) positionierbar sind, geeignet, um einen zusätzlichen linken Blindbereich (552) und einen zusätzlichen rechten Blindbereich (553) quer in Bezug auf den zentralen Blindbereich (510) zu beobachten, für den die Sicht des Benutzers, der in dem Fahrbereich (2) untergebracht ist, versperrt ist.

12. Traktor (1) nach einem der vorhergehenden Ansprüche, wobei die Erfassungsgruppe (100) zumindest zwei Mittelkameras (110) zum Beobachten des zentralen Blindbereichs (510) mit stereoskopischem Sehen umfasst.

13. Traktor (1) nach Anspruch 4 in Kombination mit einem der vorhergehenden Ansprüche, wobei die Erfassungsgruppe (100) zumindest zwei linke Kameras (120) und zumindest zwei rechte Kameras (130) zum Beobachten des linken Blindbereichs (520) bzw. des rechten Blindbereichs (530) mit stereoskopischem Sehen umfasst.

14. Traktor (1) nach Anspruch 5 in Kombination mit einem der vorhergehenden Ansprüche, wobei die Erfassungsgruppe (100) zumindest zwei hintere Kameras (140) zum Beobachten des hinteren Blindbereichs (540) mit stereoskopischem Sehen umfasst.

15. Traktor (1) nach einem der vorhergehenden Ansprüche, wobei das Bewegungssystem eine automatisierte Lenkgruppe umfasst und die Steuer- bzw. Regelgruppe (400) operativ mit der automatisierten Lenkgruppe verbunden ist, um deren Bewegung mit einem vordefinierten Lenkwinkel zu befehlen.

## Revendications

1. Tracteur (1) comprenant :
- une zone de conduite (2) pour loger un utilisateur, comprenant un écran (20) ;
- un système de mobilité ;
- un système de vision (10) comprenant :
i) un groupe de détection (100) comprenant au moins une caméra (100') convenant pour observer une région prédéfinie (500) à proximité du tracteur (1) ;
ii) un groupe d'analyse (200), convenant pour traiter et analyser les images acquises par le groupe de détection (100), pour vérifier la présence d'un sujet fixe (S) ou mobile (S') dans la région prédéfinie (500) ;
iii) un groupe de signalement (300) convenant pour signaler à l'utilisateur ce qui est détecté par le groupe de détection (100) et vérifié par le groupe d'analyse (200) au moyen :
d'un signal vidéo traité sur l'écran (20) qui affiche la région prédéfinie (500) et le sujet fixe (S) ou mobile (S') détecté ; et/ou
d'un signal acoustique ;
le tracteur (1) étant **caractérisé par** un groupe de commande (400) connecté opérationnellement au système de mobilité pour ordonner le stationnement du tracteur (1), ou une mobilité prédéfinie du tracteur (1) ou l'arrêt du tracteur (1) dans une situation dans laquelle le groupe d'analyse (200) détecte la présence d'un sujet fixe (S) ou d'un sujet mobile (S') dans la région prédéfinie (500) ;
moyennant quoi le système de mobilité comprend un groupe de transmission continu et le groupe de commande (400) est connecté opérationnellement au groupe de transmission continu pour ordonner un rapport de transmission prédéfini.

2. Tracteur (1) selon l'une quelconque des revendications précédentes, dans lequel le groupe d'analyse (200) est configuré pour détecter la distance entre le tracteur (1) et le sujet fixe (S) ou mobile (S') détecté.

3. Tracteur (1) selon l'une quelconque des revendications précédentes, comprenant un capot (5) qui s'étend le long d'un axe longitudinal (X-X) du tracteur de front à la zone de conduite (2), dans lequel le capot (5), à son extrémité avant supérieure inclut une partie de bout (50) et le groupe de détection (100) comprend une caméra centrale (110) logée dans ladite partie de bout (50) convenant pour observer une région borgne centrale (510) dans laquelle la vue de l'utilisateur logé dans la zone de conduite (2) est cachée par le capot (5).

4. Tracteur (1) selon l'une quelconque des revendications précédentes, comprenant un capot (5) qui s'étend le long d'un axe longitudinal (X-X) du tracteur de front à la zone de conduite (2), dans lequel le groupe de détection (100) comprend au moins une caméra gauche (120) placée au niveau des côtés du capot (5), de préférence logée dans une partie de bout (50), convenant pour observer une région borgne gauche (520) et une région borgne droite (530), de préférence au niveau des côtés de la région borgne centrale (510), pour laquelle la vue de l'utilisateur logé dans la zone de conduite (2) est cachée.

5. Tracteur (1) selon les revendications 3 ou 4, dans lequel le groupe d'analyse (200) est configuré pour détecter la distance entre le tracteur (1) et le sujet détecté dans la région borgne centrale (510) et/ou la région borgne gauche (520) et/ou la région borgne droite (530).

6. Tracteur (1) selon l'une quelconque des revendications précédentes, dans lequel le groupe de détection (100) comprend une caméra arrière (140), de préférence logée dans une partie arrière du tracteur (1), convenant pour observer une région borgne arrière (540), et le groupe d'analyse (200) est configuré pour détecter la distance entre la partie arrière et le sujet détecté dans la région borgne arrière (540).

7. Tracteur (1) selon l'une quelconque des revendications précédentes, dans lequel le groupe d'analyse (200) est configuré pour identifier le type de sujet détecté, entre un sujet fixe (S) et un sujet mobile (S'), en détectant également la direction de mouvement de ce dernier.

8. Tracteur (1) selon la revendication 7, dans lequel l'unité de commande (400) convient pour ordonner le ralentissement ou l'arrêt du tracteur (1) en mobilité pour éviter un choc avec le sujet et/ou convient pour ordonner le stationnement immobile du tracteur (1), en tant que fonction de détection, par le groupe d'analyse (200), de la présence d'un sujet fixe (S) ou mobile (S') dans la vidéo produite par le groupe de détection (100).

9. Tracteur (1) selon la revendication 7, dans lequel le groupe d'analyse (200) et le groupe de commande (400) fonctionnent avec un système de mobilité pour guider automatiquement le tracteur (1) dans l'exécution d'un parcours prédéfini, par exemple qui suit la direction d'extension principale du sujet fixe (S) ou un parcours prédéfini par rapport à la direction de mouvement du sujet en mobilité (S'), en tant que fonction de la détection du groupe d'analyse (200) configurable pour détecter le type de sujet fixe (S), par exemple, sa direction d'extension principale, ou le type de sujet en mobilité (S'), par exemple, sa direction de mouvement principale.

10. Tracteur (1) selon l'une quelconque des revendications précédentes, convenant pour monter des groupes accessoires (900) de front au tracteur (1) pour l'exécution d'opérations prédéfinies, dans lequel le groupe de détection (100) comprend également un groupe additionnel (150) pouvant être fixé de façon amovible au bord desdits groupes accessoires possibles (900) comprenant au moins une caméra centrale additionnelle (151) convenant pour observer une région borgne centrale additionnelle (551) pour laquelle la vue de l'utilisateur, logé dans la zone de conduite (2), est cachée par le capot (5) et le groupe accessoire (900).

11. Tracteur (1) selon l'une quelconque des revendications précédentes, dans lequel le groupe additionnel (150) comprend en outre une caméra gauche additionnelle (152) et au moins une caméra droite additionnelle (153) pouvant être positionnées au niveau des côtés de l'au moins une caméra centrale additionnelle (151), convenant pour observer une région borgne gauche additionnelle (552) et une région borgne droite additionnelle (553) transversale par rapport à la région borgne centrale (510), pour laquelle la vue de l'utilisateur logé dans la zone de conduite (2) est cachée.

12. Tracteur (1) selon l'une quelconque des revendications précédentes, dans lequel le groupe de détection (100) comprend au moins deux caméras centrales (110) pour observer la région borgne centrale (510) avec une vision stéréoscopique.

13. Tracteur (1) selon la revendication 4, en combinaison avec l'une quelconque des revendications précédentes, dans lequel le groupe de détection (100) comprend au moins deux caméras gauches (120) et au moins deux caméras droites (130) pour respectivement observer la région borgne gauche (520) et la région borgne droite (530) avec une vision stéréoscopique.

14. Tracteur (1) selon la revendication 5, en combinaison avec l'une quelconque des revendications précédentes, dans lequel le groupe de détection (100) comprend au moins deux caméras arrières (140) pour observer la région borgne arrière (540) avec une vision stéréoscopique.

15. Tracteur (1) selon l'une quelconque des revendications précédentes, dans lequel le système de mobilité comprend un groupe de direction automatique et le groupe de commande (400) est connecté opérationnellement au groupe de direction automatique pour ordonner sa mobilité à un angle de direction prédéfini.
